# EUROPEAN PATENT APPLICATION

(11) **EP 2 216 527 A2**
(43) Date of publication of application: **11.08.2010**
(21) Application number: 10152750.5
(22) Date of filing: 05.02.2010
(51) Int. Cl.: F02B 29/04

(54) **Charge air cooler**

(30) Priority: 06.02.2009 US 367380
(71) Applicant: PACCAR INC, Bellevue, WA 98804 (US)
(72) Inventor: Smith, Jeffrey P., Prosper, Texas 75078 (US)
(74) Representative: Körber, Martin Hans

(57) **Abstract**

A charge air cooler suitable for use in vehicles, such as Class 8 trucks, is disclosed. The charge air cooler includes one or more enhanced flow features that provide improved efficiency to an associated internal combustion engine. In one embodiment, the charge air cooler may include enhanced flow features that smooth the charge air flow as it transitions from an input plenum to the charge air tube conduits for reducing possible system pressure drop. In another embodiment, the input plenum and/or output plenum may be configured in order to maintain a constant charge air velocity across the inlet surface of the cooling core. To that end, the plenum may include a tapered lower section that decreases in width W, and thus, the cross sectional flow area into the cooling core, as the plenum extends from an upper region of the cooling core to the bottom of the cooling core.

## Description

### BACKGROUND

For some time, internal combustion engines have employed superchargers or turbochargers to increase power output of the engine. As is well known, superchargers and turbochargers employ belt or exhaust gas driven rotary compressors, respectively, which compresses combustion air prior to its admission to the combustion chambers of the internal combustion engine.

It has long been observed that when the incoming combustion air is compressed by the rotary compressor, it is simultaneously heated which, in turn, means that its density is decreased. Thus, at any given pressure, a unit volume of hot air from a turbocharger or a supercharger contains a lesser quantity of oxygen available for combustion than would an identical volume of cold air at the same pressure. This factor, in turn, places a limitation on the amount of fuel that may be burned in any given operating cycle of an internal combustion engine, which in turn limits the output thereof.

Consequently, particularly in vehicular applications, a charge air cooler, also referred to as an intercooler, is disposed between compressor stages or between the compressor side of the turbocharger or supercharger and the intake manifold (or equivalent) for the internal combustion engine. The hot, combustion air from the turbocharger or the supercharger, is passed through the charge air cooler to the engine. At the same time, ambient air is passed through the charge air cooler in a flow path isolated from the combustion air, but in heat exchange relation therewith. Cooling of the combustion air is obtained to increase the density of the combustion air to ultimately provide a greater quantity of oxygen per charge of air to the engine to support the combustion of a greater quantity of fuel, increasing the output of the engine.

Turbocharged internal combustion engines for highway trucks have employed charged air coolers for many years. Various arrangements have been used in installing these charge air coolers on highway trucks along with the radiator. One arrangement places the charge air cooler in front of the radiator because the charge air cooler requires a lower ambient air temperature than the radiator. While current charge air coolers perform adequately for their intended applications, the industry continues to strive for improvements of the charge air cooler in order to increase efficiencies of the associated internal combustion engine.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with aspects of the present invention, an apparatus is provided for cooling the temperature of charged air to be introduced to an internal combustion engine. The apparatus includes an input plenum for receiving charged air flowing in a first direction and a cooling core comprising a plurality of charge air tubes substantially perpendicular to the first direction. The plurality of charge air tubes define respective conduits and have input ends for receiving charged air from the input plenum and output ends for outputting cooled charged air. In one embodiment, one or more of the conduits include a smoothly converging region at the entrance to the input ends of the charge air tubes. The apparatus further includes an output plenum for receiving cooled charged air from the cooling core and outputting the charge air to the engine.

In accordance with another aspect of the present invention, an apparatus is provided for cooling the temperature of charged air to be introduced to an internal combustion engine. The apparatus includes an input plenum for receiving the charged air flowing in a first direction and a cooling core comprising a plurality of charge air tubes substantially perpendicular to the first direction. The charge air tubes have input ends for receiving charged air from the input plenum and output ends for outputting cooled charged air. The apparatus also includes an output plenum for receiving cooled charged air from the cooling core and outputting the charge air to the engine. In one embodiment, the input ends of the one or more charge air tubes includes means for smoothing the transition of air flow into the associated charged air conduits from the input plenum.

In accordance with another aspect of the present invention, an apparatus is provided for cooling the temperature of charged air to be introduced to an internal combustion engine. The apparatus includes an input plenum for receiving charged air flowing in a first direction, a cooling core comprising a plurality of charge air tubes substantially perpendicular to the first direction, the plurality of charge air tubes defining respective conduits and having input ends for receiving charged air from the input plenum and output ends for outputting cooled charged air, and an output plenum for receiving cooled charged air from the cooling core and outputting the charge air to the engine. In one embodiment, input plenum or output plenum includes an upper region and a lower region. In this embodiment, the lower region has a cross sectional area across the ends of the charge air tubes that decreases as it extends away from a plenum inlet.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is a perspective view of one exemplary embodiment of a charge air cooler formed in accordance with aspects of the present invention;
FIGURE 2 is an exploded perspective view of the charge air cooler of FIGURE 1;
FIGURE 3A is a partial, magnified perspective view of one embodiment of the cooling core of the charge air cooler of FIGURE 2;
FIGURE 3B is a cross-sectional view of the cooling core of FIGURE 3A;
FIGURE 4 is a cross-sectional view of the cooling core of FIGURE 3A with enhanced flow features in accordance with aspects of the present invention;
FIGURES 5-8 are partial perspective views of exemplary embodiments of charge air coolers with enhanced flow features formed in accordance with aspects of the present invention;
FIGURE 9 is a partial side view of an alternative embodiment of a portion of a charge air cooler with enhanced flow features formed in accordance with aspects of the present invention;
FIGURE 10 is a side view of one embodiment of an input and/or output plenum formed in accordance with aspects of the present invention.

### DETAILED DESCRIPTION

Embodiments of the present invention will now be described with reference to the drawings where like numerals correspond to like elements. As described herein, embodiments of the present invention are generally directed to charge air coolers suitable for use in vehicles, such as Class 8 trucks. More particularly, embodiments of the present invention are directed to charge air coolers with enhanced flow features that provide improved efficiency to an associated internal combustion engine.

The following discussion proceeds with reference to examples of charged air coolers with enhanced air flow features. While these examples provided herein have been described in various detail, it will be apparent to one skilled in the art that this is done for illustrative purposes only and should not be construed as limiting the scope of the invention, as claimed. Further, it will be appreciated that embodiments of the present invention may employ any combination of features described herein. It will be appreciated that aspects of the present invention have wide application, and therefore, may be suitable for use with any type of vehicle, such as passenger vehicles, buses, commercial vehicles, marine vessels, locomotives, etc., that utilize either a turbocharged or supercharged internal combustion engine. Accordingly, the following descriptions and illustrations herein should be considered illustrative in nature, and thus, not limiting the scope of the present invention, as claimed.

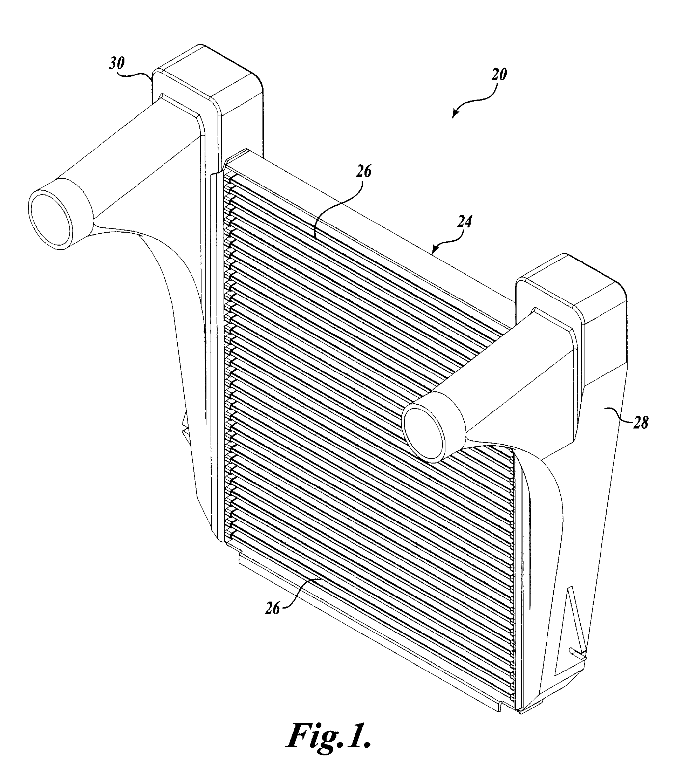

Turning now to FIGURE 1, there is shown one exemplary embodiment of a charged air cooler, generally designated 20, formed in accordance with aspects of the present invention. As best shown in FIGURE 1, the charged air cooler 20 generally includes an air-to-air cooling core 24 comprised of horizontally disposed charge air tubes 26 exposed to a cooling airflow, an input manifold or plenum 28, and an output manifold or plenum 30. In operation, charge air from either a turbocharger, supercharger, or the like, enters the input plenum 28, which distributes the charged air to the input ends of the horizontal charge air tubes 26. The charged air travels through the charge air tubes 26 of the cooling core 24, where the charge air transfers some of its heat to the cooling air flowing around the horizontal charge air tubes 26. The cooled charge air leaves the cooling core 24 and passes through an output plenum 30, which collects the cooled charge air and directs it to the engine intake.

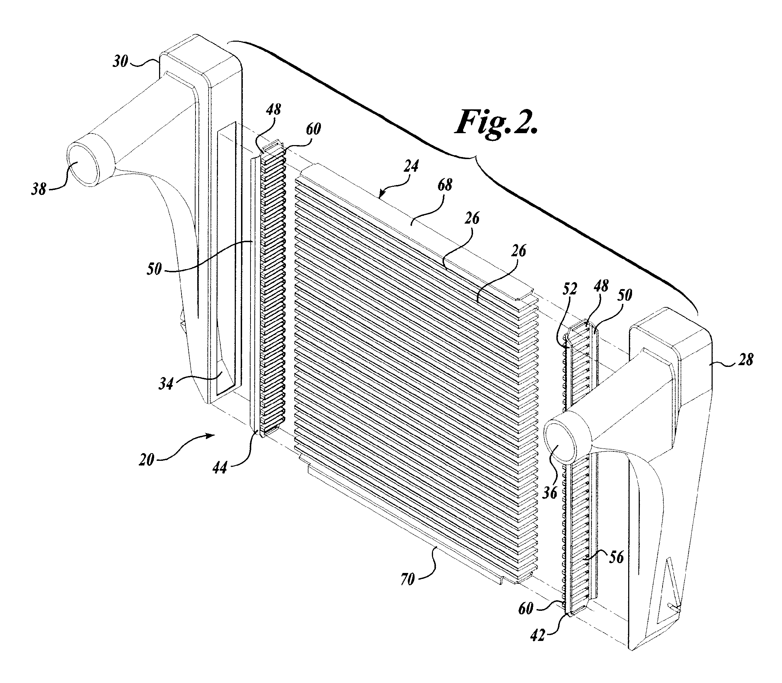

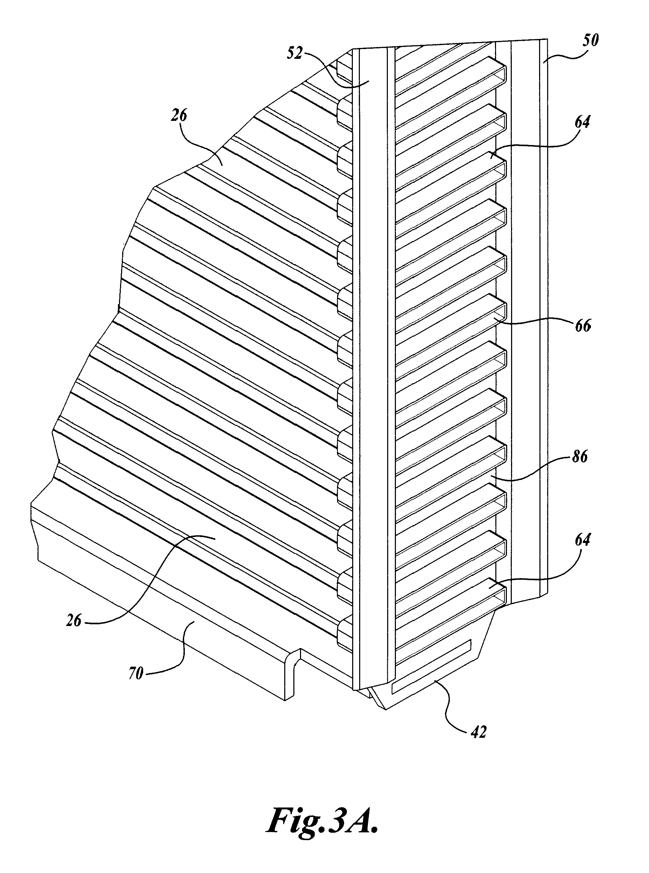

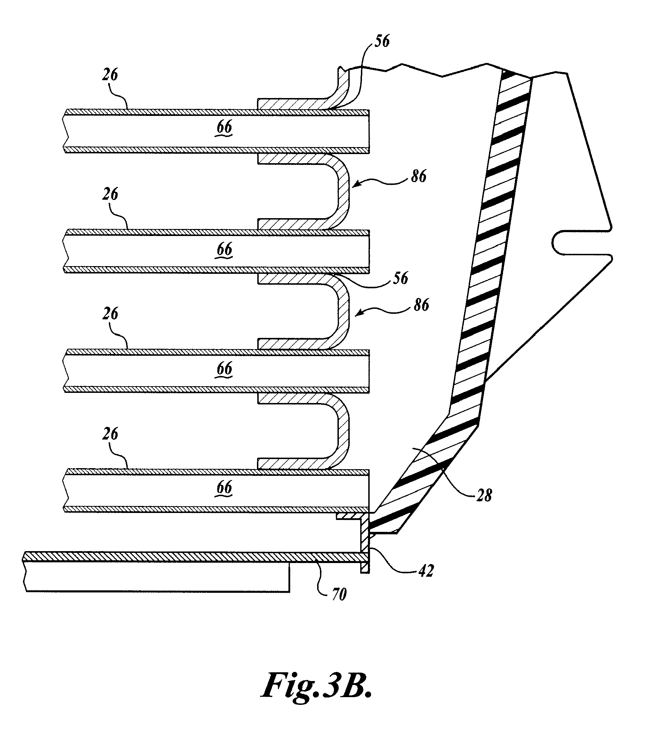

Referring now to FIGURES 2 and 3, the components of the charge air cooler 20 will be described in more detail. As best shown in the embodiment of FIGURES 2 and 3, the input plenum 28 and output plenum 30 are elongated from top to bottom and have respective rectangular openings 32 and 34 (opening 32 of input plenum 28 is hidden in FIGURE 2) which extend along a portion of or substantially, but not entirely, the length of the respective plenums. As shown in the FIGURE 2, at their upper ends, the input plenum 28 and output plenum 30 include charge air inlet port 36 and charge air outlet port 38, respectively. In operation, the charge air inlet port 36 is fluidly connected to, for example, the outlet of the rotary compressor of a turbocharger or supercharger with which the charge air cooler will be used. Similarly, the charge air outlet port 38 is fluidly connected to, for example, the intake of the associated internal combustion engine with which the charge air cooler will be used.

The aforementioned rectangular openings 32 and 34 in the input plenum 28 and output plenum 30 are closed by respective header plates 42 and 44. In one embodiment, the header plates 42 and 44 may be formed with a centralized panel 48 flanked by legs 50 and 52, which act as flanges extending along the edges of the panel 48 for the entire length of the corresponding plates 42 and 44. Charge air tube slots 56 are formed in the central panel 48 in a spaced apart manner. In the embodiment shown, the slots 56 are elongated, although other slot configurations are within the scope of the present invention, as claimed. The slots 56 extend generally transverse to the direction of elongation of each of the plates 42 and 44. In use, the charge air slots 56 in the header plate 42 are substantially aligned with the charge air slots 56 in the header plate 44.

As best shown in FIGURE 2, the charge air tubes 26 of the cooling core 24 extend between the header plates 42 and 44 with their ends inserted or otherwise disposed adjacent the slots 56, thereby connecting the charge air tubes 26 into fluid communication with the input and output plenums 28 and 30. In the embodiment shown, the plates 42 and 44 include bosses 60 disposed on their core section side, which surround the slots 56 for supporting the ends of the charge air tubes 26. As seen in the embodiment of FIGURE 3, the charge air tubes 26 have their input ends 64 extending past the outward facing surface of the panel 48 between the legs 50 and 52 a short distance. In the usual case, the distance will be on the order of approximately 1/4 to 1/2", although the ultimate distance selected will in part depend upon the size of the plenums as well as the size of the charge air cooler itself. In the embodiment shown, the charge air tubes 26 are flattened, although other configurations are within the scope of the present invention, as claimed. Conduits 66 formed by the charge air tubes 26 have a generally rectangular cross-section and are arranged so that the input ends 64 of the charge air tubes 26 are oriented along a vertical plane so that they are generally perpendicular to the airflow in the input plenum.

In some embodiments of the present invention, other components may be utilized to form the cooling core 24. For example, fins (not shown) may be disposed between adjacent charge air tubes 26 and in heat exchange relation therewith. Additionally, top and bottom plates 68 and 70 may be utilized, if desired.

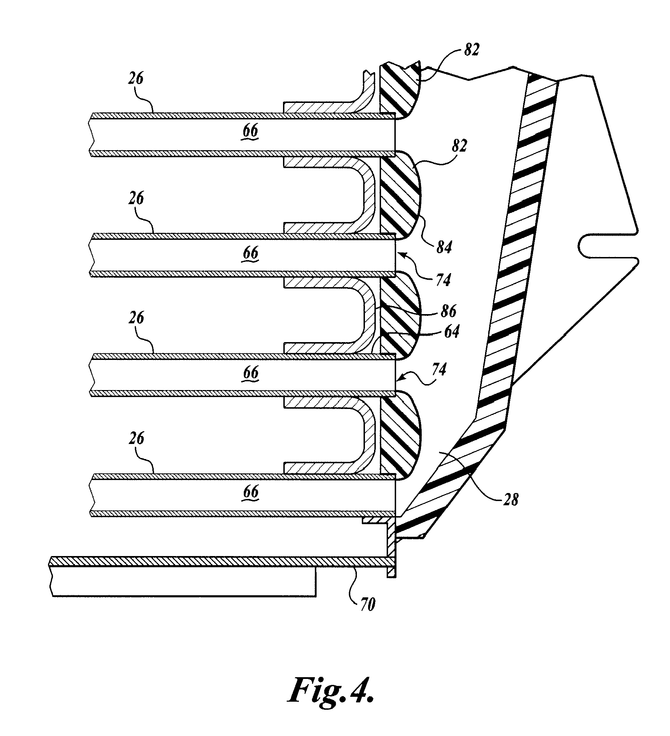

In accordance with aspects of the present invention, the charge air cooler 20 may include enhanced flow features that smooth the charge air flow as it transitions from the input plenum 28 to the charge air tube conduits 66 for reducing possible system pressure drop, and thus, increasing the efficiency of the associated internal combustion engine. To that end, in several embodiments illustrated in FIGURES 4-9, the entrance 74 to the conduits 66 of one or more charge air tubes 26 is smoothed, i.e., absence of sharp edges, to promote better airflow into the conduits 66 of the charge air tubes 66 from the input plenum 28. For example, as best shown in FIGURE 4, the entrance 74 to the input plenum ends 64 of one or more charge air tube conduits 66 are shaped in the formed of a smoothly converging region, sometimes referred in air handling industry as a bell mouth. The entrance 74, now referred to a bell mouth entrance 74, helps prevent the possibility of localized contraction of flow area, which results in a decrease in flow efficiency. As such, the discharge coefficient of the system is raised.

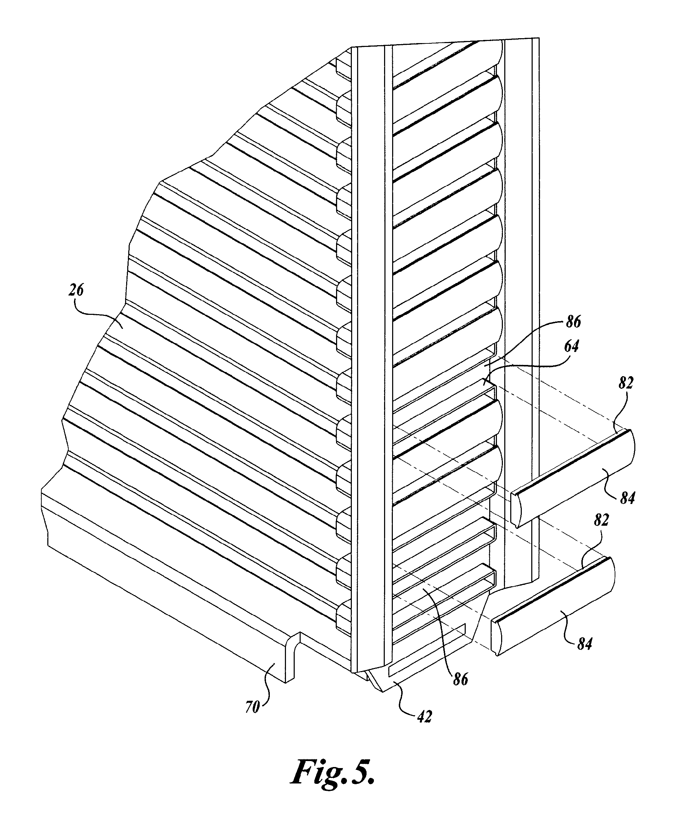

In one embodiment, as best shown in FIGURES 4 and 5, the bell mouth entrance 74 is formed by inserts 82 having a rounded top surface 84. One or more inserts 82 are press fit, welded, heat bonded, chemically bonded, or otherwise affixed in the space 86 in-between the input ends 64 of two or more charge air tubes 26.

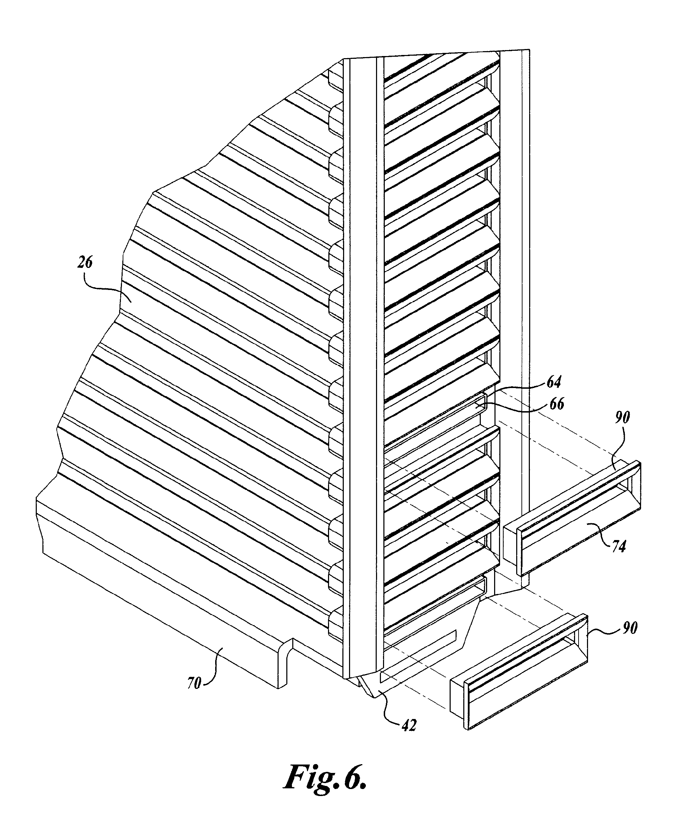

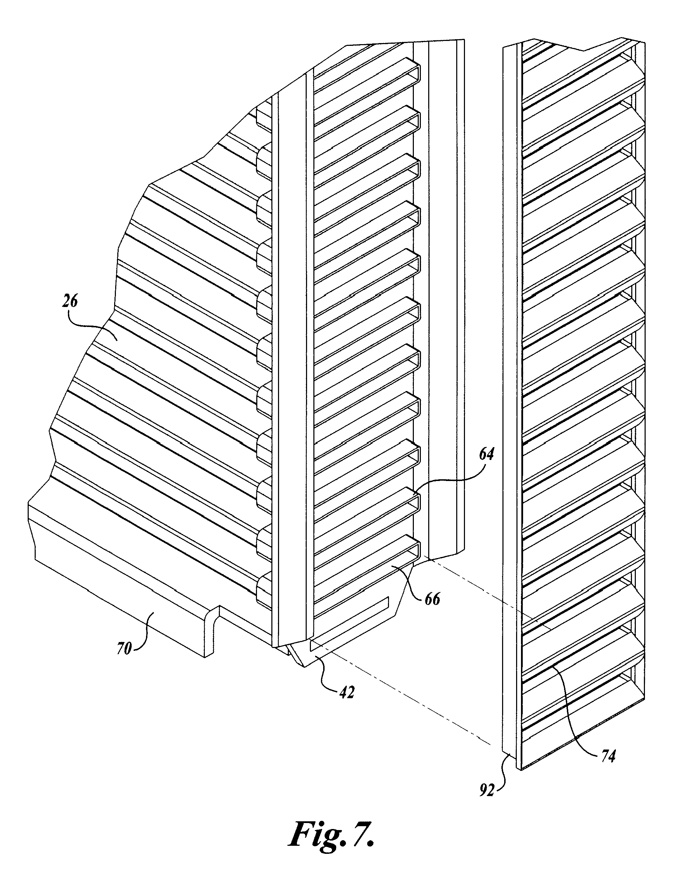

FIGURE 6 illustrates another embodiment of structure that forms the bell mouth entrance 74. As shown in FIGURE 6, the bell mouth entrance 74 is formed by caps 90, which can be clipped on, press fit, welded, heat bonded, chemically bonded, or otherwise mounted over the input ends 64 of one or more charge air tubes 26 in a substantially sealed manner. In another embodiment best shown in FIGURE 7, a one piece unit 92 composed of a plurality of caps of FIGURE 6 can be manufactured from a suitable material such as aluminum, silicon, high temperature polymers, etc., thereby forming a plurality of bell mouth entrances 74 to conduits 66.

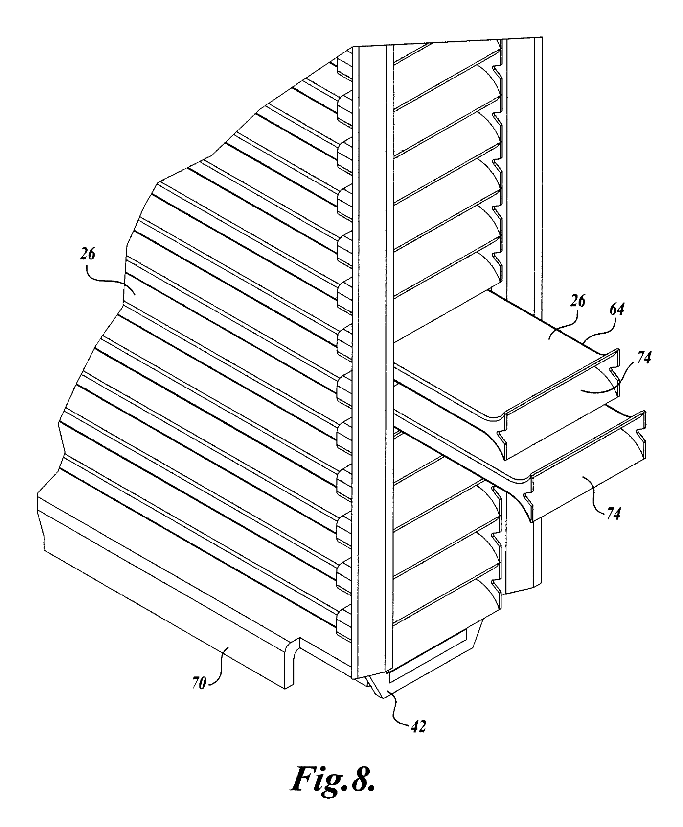

FIGURE 8 illustrates another embodiment of structure that forms the bell mouth entrance 74. As shown in FIGURE 8, the input ends 64 of one or more charge air tubes 26 are integrally formed with a flared end or horn 94.

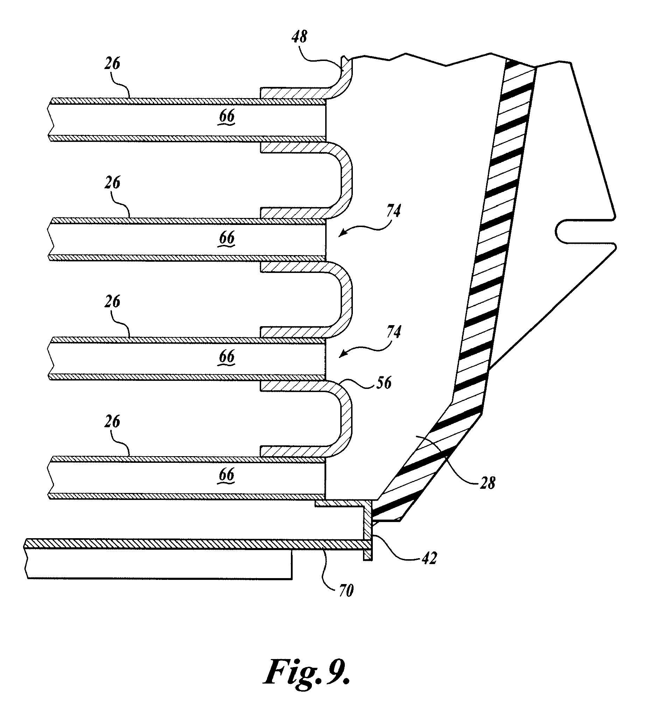

FIGURE 9 illustrates another embodiment of the structure that forms the bell mouth entrance 74. As shown in FIGURE 9, the charge air tubes 26 are shortened as compared to the embodiment shown in FIGURE 4 so that one or more input plenum ends 64 are recessed into the bosses 60. Additionally, the transition of the panel 48 into slots 56 are somewhat rounded, as shown in FIGURE 9.

The examples described thus far have been generally directed to reducing possible system pressure drop, and thus, increasing the efficiency of the associated internal combustion engine, by improvements to the fluid flow entrance of the cooling core 24. As will now be described in more detail, reductions in pressure drop may also be addressed by configurations of the input plenum and/or output plenum. In particular, embodiments will be described that reconfigure the input plenum and/or output plenum in order to maintain a constant charge air velocity across the inlet surface of the cooling core.

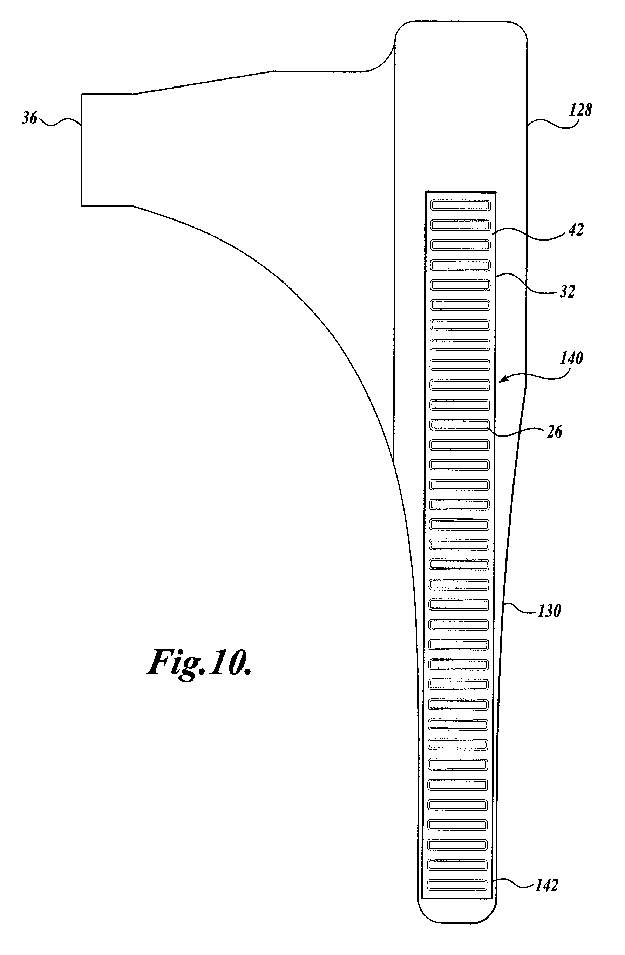

Turning now to FIGURE 10, there is shown a side view of another exemplary embodiment of an input plenum 128 formed in accordance with aspects of the present invention. As best shown in FIGURE 10, the input plenum includes a tapered lower section 130 that decreases in width W, and thus, the cross sectional flow area into the cooling core 24, as the plenum extends from an upper region 140 of the cooling core 24 to the bottom 142 of the cooling core 24. While FIGURE 9 illustrates the input plenum, it will be appreciated that the output plenum may also be configured with a tapered lower section. In operation, the tapered section maintains flow velocity as constant as possible. When approaching constant flow velocity, flow losses due to pressure drops are minimized since alternating accelerating and decelerating flow extracts flow energy, causing pressure drop. Additionally, the tapered section 130 promotes a more even mass flow distribution between the charge air tubes 26.

While illustrative embodiments have been illustrated and described, it will be appreciated that various changes can be made therein without departing from the spirit and scope of the claimed subject matter.

## Claims

1. An apparatus for cooling the temperature of charged air to be introduced to an internal combustion engine, the apparatus comprising:
(a) an input plenum for receiving charged air flowing in a first direction;
(b) a cooling core comprising a plurality of charge air tubes substantially perpendicular to the first direction, the plurality of charge air tubes defining respective conduits and having input ends for receiving charged air from the input plenum and output ends for outputting cooled charged air, wherein one or more of the conduits include a smoothly converging region at the entrance to the input ends of the charge air tubes; and
(c) an output plenum for receiving cooled charged air from the cooling core and outputting the charge air to the engine.

2. The apparatus of Claim 1, wherein the smoothly converging region is formed by a horn integrally formed at the input end of the charge air tube.

3. The apparatus of Claim 1, wherein the smoothly converging region is formed by a cap disposed on the input end of the charge air tube.

4. The apparatus of Claim 1, wherein the smoothly converging region is formed by two inserts having rounded surfaces, the inserts being mounted on the sides of the input end of one charge air tube.

5. The apparatus of Claim 1, wherein the cross sectional area across the ends of the charge air tubes decreases as the input plenum extends away from an input plenum inlet.

6. The apparatus of Claim 5, wherein the decrease in cross sectional area is formed by a tapered section.

7. The apparatus of Claims 1-6, **characterized by** the input plenum or output plenum including an upper region and a lower region, the lower region having a cross sectional area across the ends of the charge air tubes that decreases as it extends away from a plenum inlet.

8. An apparatus for cooling the temperature of charged air to be introduced to an internal combustion engine, the apparatus comprising:
(a) an input plenum for receiving the charged air flowing in a first direction;
(b) a cooling core comprising a plurality of charge air tubes substantially perpendicular to the first direction, the charge air tubes having input ends for receiving charged air from the input plenum, and output ends for outputting cooled charged air; and
(c) an output plenum for receiving cooled charged air from the cooling core and outputting the charge air to the engine;
**characterized by** the input ends of the one or more charge air tubes including means for smoothing the transition of air flow into the associated charged air conduits from the input plenum.

9. The apparatus of Claim 8, wherein the means for smoothing the transition of air flow into the associated charged air conduits from the input plenum is a bell mouth.

10. The apparatus of Claim 9, wherein the bell mouth is formed by a horn integrally formed at the input end of the charge air tube.

11. The apparatus of Claims 8-10, further **characterized by** the input plenum or output plenum including an upper region and a lower region, the lower region having a cross sectional area across the ends of the charge air tubes that decreases as it extends away from a plenum inlet.

12. An apparatus for cooling the temperature of charged air to be introduced to an internal combustion engine, the apparatus comprising:
(a) an input plenum for receiving charged air flowing in a first direction;
(b) a cooling core comprising a plurality of charge air tubes substantially perpendicular to the first direction, the plurality of charge air tubes defining respective conduits and having input ends for receiving charged air from the input plenum and output ends for outputting cooled charged air; and
(c) an output plenum for receiving cooled charged air from the cooling core and outputting the charge air to the engine;
**characterized by** the input plenum or output plenum including an upper region and a lower region, the lower region having a cross sectional area across the ends of the charge air tubes that decreases as it extends away from a plenum inlet.

13. The apparatus of Claim 12, further **characterized by** the input ends of the one or more charge air tubes including means for smoothing the transition of air flow into the associated charged air conduits from the input plenum.

14. The apparatus of Claim 12, further **characterized by** one or more of the charge air tubes including a smoothly converging region at the entrance to the input ends of the charge air tubes.

15. The apparatus of Claim 14, wherein the smoothly converging region is formed by one of the following:
(i) a horn integrally formed at the input end of the charge air tube;
(ii) a cap disposed on the input end of the charge air tube; and
(iii) two inserts having rounded surfaces, the inserts being mounted on the sides of the input end of one charge air tube.
